# EUROPÄISCHE PATENTANMELDUNG

(11) **EP 1 775 189 A2**
(43) Veröffentlichungstag der Anmeldung: **18.04.2007**
(21) Anmeldenummer: 06019243.2
(22) Anmeldetag: 14.09.2006
(51) Int. Cl.: B60T 11/16

(54) **Geber- oder Nehmerzylinder**

(30) Priorität: 11.10.2005 DE 102005048616
(71) Anmelder: LuK Lamellen und Kupplungsbau Beteiligungs KG, 77815 Bühl (DE)
(72) Erfinder: Harter, Stefan, 77883 Ottenhöfen (DE); Hahn, Henry, 22525 Hamburg (DE); Welter, Roland, Dr., 77815 Bühl (DE); Sester, Christof, 77723 Gengenbach (DE)

(57) **Zusammenfassung**

Die Erfindung betrifft einen Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt.

Um einen Geber- oder Nehmerzylinder zu schaffen, dessen Kolben in einer Auslieferungsstellung fixierbar ist, ist an dem Zylindergehäuse eine Sperreinrichtung angebracht, durch die der Kolben solange in der Auslieferungsstellung gehalten wird, bis mindestens eine Sollbruchstelle bricht, die an einer Verbindungsstelle zwischen dem Zylindergehäuse und der Sperreinrichtung vorgesehen ist.

## Beschreibung

Die Erfindung betrifft einen Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt.

Aufgabe der Erfindung ist es, einen Geber- oder Nehmerzylinder gemäß dem Oberbegriff des Anspruchs 1 zu schaffen, dessen Kolben in einer Auslieferungsstellung fixierbar ist.

Die Aufgabe ist bei einem Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt, dadurch gelöst, dass an dem Zylindergehäuse eine Sperreinrichtung angebracht ist, durch die der Kolben solange in der Auslieferungsstellung gehalten wird, bis mindestens eine Sollbruchstelle bricht, die an einer Verbindungsstelle zwischen dem Zylindergehäuse und der Sperreinrichtung vorgesehen ist. Durch die Sperreinrichtung wird der Kolben vor der Inbetriebnahme des Zylinders in seiner Auslieferungsstellung gehalten, die zwischen den beiden Extremstellungen des Kolbens liegt. Das Zylindergehäuse kann einteilig oder mehrteilig ausgeführt sein.

Ein bevorzugtes Ausführungsbeispiel des Zylinders ist dadurch gekennzeichnet, dass die Sperreinrichtung einen Sperrring umfasst, der im Bereich des Durchgangslochs einstückig mit dem Zylindergehäuse verbunden ist. Vorzugsweise ist der Sperrring im Bereich des Durchgangslochs an das Zylindergehäuse angespritzt.

Ein weiteres bevorzugtes Ausführungsbeispiel des Zylinders ist dadurch gekennzeichnet, dass zwischen dem Sperrring und dem Zylindergehäuse eine in Umfangsrichtung verlaufende Sollbruchlinie ausgebildet ist. Im Bereich der Sollbruchlinie ist der Querschnitt des Materials, aus dem das Zylindergehäuse und der Sperrring gebildet sind, bewusst geschwächt.

Ein weiteres bevorzugtes Ausführungsbeispiel des Zylinders ist dadurch gekennzeichnet, dass an dem Kolben ein Bund ausgebildet ist, der in der Auslieferungsstellung des Kolbens an dem Sperrring anliegt. Der Außendurchmesser des Bundes ist kleiner als der Innendurchmesser des Durchgangslochs in dem Zylindergehäuse. Dadurch wird nach dem Ablösen des Sperrrings von dem Zylindergehäuse ein ungehinderter Durchtritt des Bundes durch das Durchgangsloch in dem Zylindergehäuse gewährleistet. Vorzugsweise ist der Bund durch eine Kolbenrückstellfeder, die zum Beispiel zwischen dem Kolben und dem Zylindergehäuse angeordnet ist, gegen den Sperrring vorgespannt.

Ein weiteres bevorzugtes Ausführungsbeispiel des Zylinders ist dadurch gekennzeichnet, dass der Außendurchmesser des Sperrrings größer als der Innendurchmesser des Durchgangslochs in dem Zylindergehäuse ist. Dadurch wird sichergestellt, dass der Sperrring im Bereich des Durchgangslochs an dem Zylindergehäuse zur Anlage kommt, wenn der Kolben in seine vollständig eingefahrene Stellung bewegt wird.

Die oben angegebene Aufgabe ist bei einem Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt, auch dadurch gelöst, dass ein Sperrring kraftschlüssig und/oder formschlüssig so mit dem Kolben oder der Kolbenstange verbunden ist, dass der Kolben in Längsrichtung relativ zu dem Sperrring bewegbar ist, sobald eine auf den Kolben oder die Kolbenstange wirkende Kraft einen vorgegebenen Wert überschreitet. Der Sperrring ist nachgiebig, elastisch und/oder geschlitzt ausgebildet. Durch den Sperrring wird der Kolben vor der Inbetriebnahme des Zylinders in seiner Auslieferungsstellung gehalten, die zwischen den beiden Extremstellungen des Kolbens liegt. Das Zylindergehäuse kann einteilig oder mehrteilig ausgeführt sein.

Ein weiteres bevorzugtes Ausführungsbeispiel des Zylinders ist dadurch gekennzeichnet, dass an dem Zylindergehäuse im Bereich des Durchgangslochs ein sich radial nach innen erstreckender Kragen angebracht ist, an dem der Sperrring in einer Auslieferungsstellung des Kolbens anliegt. Der Außendurchmesser des Sperrrings ist größer als der Innendurchmesser des Kragens in dem Zylindergehäuse. Dadurch wird der Sperrring in der Auslieferungsstellung des Kolbens an dem Kragen in Anlage gehalten. Vorzugsweise ist der Sperrring durch eine Kolbenrückstellfeder, die zwischen dem Kolben und dem Zylindergehäuse eingespannt ist, gegen den Kragen vorgespannt.

Ein weiteres bevorzugtes Ausführungsbeispiel des Zylinders ist dadurch gekennzeichnet, dass die Kolbenstange oder der Kolben eine umlaufende Ringnut aufweist, in die der Sperrring in der Auslieferungsstellung des Kolbens eingreift. Dadurch wird die Montage des Sperrrings an einer definierten Stelle der Kolbenstange vereinfacht.

Ein weiteres bevorzugtes Ausführungsbeispiel des Zylinders ist dadurch gekennzeichnet, dass die Kolbenstange oder der Kolben eine weitere umlaufende Ringnut aufweist, in die der Sperrring in der vollständig ausgefahrenen Stellung der Kolbenstange eingreift. Dadurch wird der Sperrring in axialer Richtung an der Kolbenstange fixiert, sobald die Kolbenstange zum ersten Mal vollständig ausgefahren wird.

Die oben angegebene Aufgabe ist bei einem Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt, auch dadurch gelöst, dass ein Sperrring kraftschlüssig und/oder formschlüssig so mit dem Zylindergehäuse verbunden ist, dass der Kolben in Längsrichtung relativ zu dem Sperrring bewegbar ist, sobald eine auf den Kolben oder die Kolbenstange wirkende Kraft einen vorgegebenen Wert überschreitet. Durch den Sperrring wird der Kolben vor der Inbetriebnahme des Zylinders in seiner Auslieferungsstellung gehalten, die zwischen den beiden Extremstellungen des Kolbens liegt. Der Außendurchmesser des Kolbens ist größer als der Innendurchmesser des Sperrrings in dem Zylindergehäuse. Vorzugsweise ist der Kolben durch eine Kolbenrückstellfeder, die zwischen dem Zylindergehäuse und dem Kolben eingespannt ist, gegen den Sperrring vorgespannt. Der Sperrring ist nachgiebig, elastisch und/oder geschlitzt ausgebildet. Das Zylindergehäuse kann einteilig oder mehrteilig ausgeführt sein.

Ein weiteres bevorzugtes Ausführungsbeispiel des Zylinders ist dadurch gekennzeichnet, dass das Zylindergehäuse eine umlaufende Ringnut aufweist, in die der Sperrring in der Auslieferungsstellung des Kolbens eingreift. Dadurch wird die Montage des Sperrrings an einer definierten Stelle der Kolbenstange vereinfacht.

Ein weiteres bevorzugtes Ausführungsbeispiel des Zylinders ist dadurch gekennzeichnet, dass das Zylindergehäuse eine weitere umlaufende Ringnut aufweist, die zur Aufnahme des Sperrrings dient, sobald der Kolben aus seiner Auslieferungsstellung bewegt wird. Dadurch wird eine ungehinderte Bewegung der Kolbenstange gewährleistet.

Die oben angegebene Aufgabe ist bei einem Geber- oder Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt und zumindest teilweise von einer Schutzeinrichtung mit mindestens einer Schutzhülse umgeben ist, die teleskopartig zwischen einer eingefahrenen und einer ausgefahrenen Stellung bewegbar ist, dadurch gelöst, dass die Schutzhülse in ihrer eingefahrenen Stellung einstückig so mit dem Zylindergehäuse verbunden ist, dass der Kolben solange in der Auslieferungsstellung gehalten wird, bis mindestens eine Sollbruchstelle bricht, die an der Verbindungsstelle zwischen dem Zylindergehäuse und der Schutzhülse vorgesehen ist. Durch die Schutzhülse wird der Kolben vor der Inbetriebnahme des Zylinders in seiner Auslieferungsstellung gehalten, die zwischen den beiden Extremstellungen des Kolbens liegt. Das Zylindergehäuse kann einteilig oder mehrteilig ausgeführt sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Figur 1 einen Kupplungsnehmerzylinder im Längsschnitt gemäß einem ersten Ausführungsbeispiel in der Auslieferungsstellung des Kolbens;
Figur 2 den Kupplungsnehmerzylinder aus Figur 1 in der ausgefahrenen Stellung der Kolbenstange;
Figur 3 den Kupplungsnehmerzylinder aus Figur 1 in der eingefahrenen Stellung der Kolbenstange;
Figur 4einen Kupplungsnehmerzylinder im Längsschnitt gemäß einem zweiten Ausführungsbeispiel in der Auslieferungsstellung des Kolbens;
Figur 5den Kupplungsnehmerzylinder aus Figur 4 in der ausgefahrenen Stellung der Kolbenstange;
Figur 6den Kupplungsnehmerzylinder aus Figur 4 in der eingefahrenen Stellung der Kolbenstange;
Figur 7 einen Kupplungsnehmerzylinder im Längsschnitt gemäß einem dritten Ausführungsbeispiel in der Auslieferungsstellung des Kolbens;
Figur 8 einen vergrößerten Ausschnitt aus Figur 7;
Figur 9einen Kupplungsnehmerzylinder im Längsschnitt gemäß einem vierten Ausführungsbeispiel in der Auslieferungsstellung des Kolbens;
Figur 10 einen vergrößerten Ausschnitt aus Figur 9;
Figur 11 einen Kupplungsnehmerzylinder im Längsschnitt gemäß einem fünften Ausführungsbeispiel in der Auslieferungsstellung des Kolbens;
Figur 12 den Kupplungsnehmerzylinder aus Figur 11 im ausgefahrenen Zustand der Kolbenstange und
Figur 13 den Kupplungsnehmerzylinder aus Figur 11 im eingefahrenen Zustand der Kolbenstange.

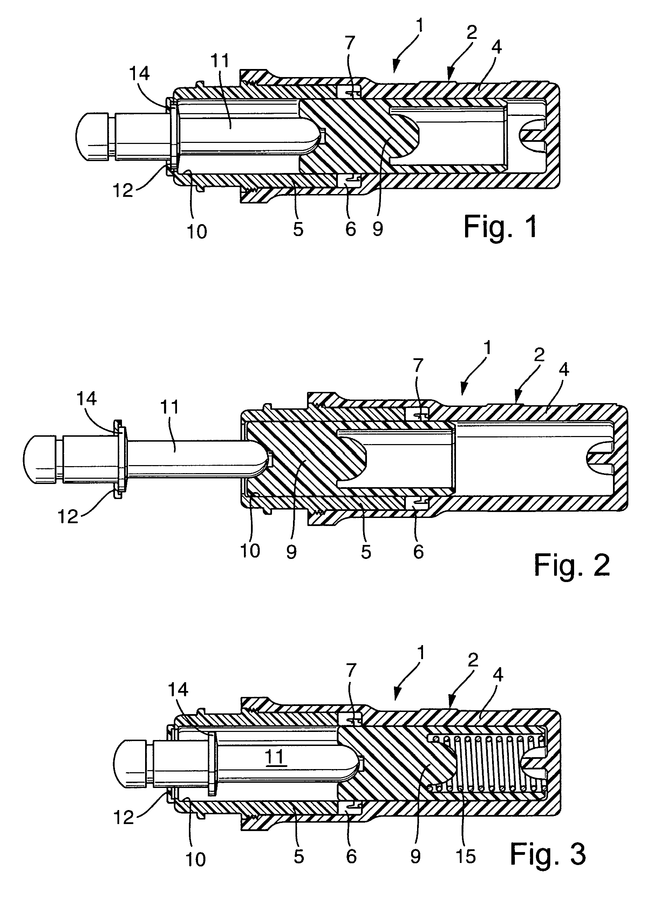

In Figur 1 ist ein Kupplungsnehmerzylinder 1 eines Kupplungsbetätigungssystems eines Kraftfahrzeugs im Längsschnitt dargestellt. Der Kupplungsnehmerzylinder 1 umfasst ein Zylindergehäuse 2, das aus einem Zylindergrundkörper 4 und einer Führungshülse 5 zusammengesetzt ist. Die Führungshülse 5 ist stoffschlüssig mit dem Zylindergrundkörper 4 verbunden. In einem Ringspalt zwischen dem Zylindergrundkörper 4 und der Führungshülse 5 ist eine Ringdichtung 6 angeordnet, die eine radial nach innen abstehende, umlaufende Dichtlippe 7 aufweist. Die Dichtlippe 7 der Ringdichtung 6 liegt an der Umfangsfläche eines Kolbens 9 an, der im Zylindergehäuse 2 hin und her bewegbar aufgenommen ist. An einem Ende ist das Zylindergehäuse 2 geschlossen ausgebildet. An dem anderen Ende weist das Zylindergehäuse 2 ein Durchgangsloch 10 auf, das in der Führungshülse 5 ausgespart ist. Durch das Durchgangsloch 10 erstreckt sich eine Kolbenstange 11 aus dem Zylindergehäuse 2 heraus.

Im Bereich des Durchgangslochs 10 ist an das Zylindergehäuse 2 beziehungsweise an die Führungshülse 5 ein Sperrring 12 eingespritzt, der sich radial nach innen erstreckt. Der Innendurchmesser des Sperrrings 12 ist kleiner als der Außendurchmesser eines Bundes 14, der an der Kolbenstange 11 radial nach außen absteht. Der Bund 14 liegt so an dem Sperrring 12 an, dass sich die Kolbenstange 11 zusammen mit dem Kolben 9 nicht weiter aus dem Zylindergehäuse 2 heraus bewegen kann. Zwischen dem Sperrring 12 und dem angrenzenden Zylindergehäuse 2 ist eine Schwächungslinie ausgebildet, die auch als Sollbruchlinie bezeichnet wird. Wenn über den Bund 14 eine Sollbruchkraft in axialer Richtung von dem Kolben 9 weg auf den Sperrring 12 aufgebracht wird, dann bricht die Sollbruchlinie und der Sperrring 12 löst sich von dem Zylindergehäuse 2.

In Figur 2 ist die Kolbenstange 11 in ihrer ausgefahrenen Stellung dargestellt. Der Sperrring 12 hat sich von dem Zylindergehäuse 2 gelöst.

In Figur 3 befindet sich die Kolbenstange 11 in ihrer eingefahrenen Stellung. Beim Einfahren der Kolbenstange 11 beziehungsweise des Kolbens 9 kommt der Sperrring 12 wieder im Bereich des Durchgangslochs 10 an dem Zylindergehäuse 2 zur Anlage. Danach wird die Kolbenstange 11 entlang dem Sperrring 12 verschoben. Durch die Wahl einer geeigneten Fixiereinheit kann der Sperrring nach dem Lösen der Sollbruchlinie auch an einer definierten Position der Kolbenstange gehalten werden.

In Figur 3 sieht man, dass zwischen dem geschlossenen Ende des Zylindergehäuses 2 und dem Kolben 9 eine Kolbenrückstellfeder 15 eingespannt ist. Durch die Kolbenrückstellfeder 15 wird der Bund 14 in der Auslieferungsstellung des Kolbens 9 in Anlage an dem Sperrring 12 gehalten, wie in Figur 1 dargestellt ist. Wenn die Kraft des Kolbens 9 auf den Sperrring 12 einen bestimmten Wert übersteigt, dann löst sich der Sperrring 12 an der definierten Sollbruchlinie von dem Zylindergehäuse 2 beziehungsweise der Führungshülse 5 und stellt dadurch die Funktion des Kupplungsnehmerzylinders 1 im Betrieb sicher.

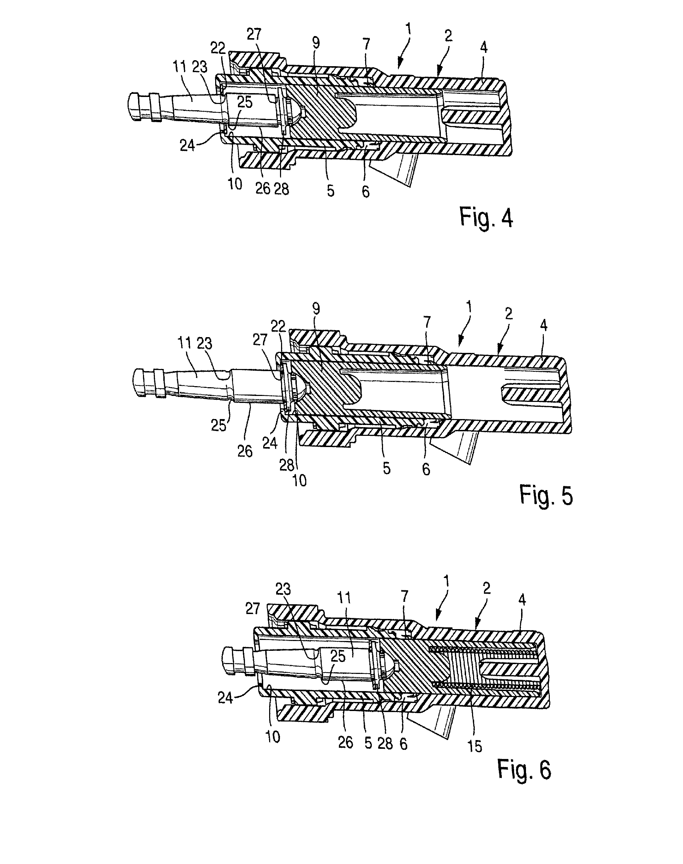

In den Figuren 4 bis 13 sind ähnliche Ausführungsbeispiele wie in den Figuren 1 bis 3 dargestellt. Zur Bezeichnung gleicher Teile werden gleiche Bezugszeichen verwendet. Um Wiederholungen zu vermeiden, wird auf die vorangegangene Beschreibung der Figuren 1 bis 3 verwiesen. Im Folgenden wird nur auf die Unterschiede zwischen den einzelnen Ausführungsbeispielen eingegangen.

Bei dem in den Figuren 4 bis 6 dargestellten Kupplungsnehmerzylinder 1 ist ein Sperrring 22 auf die Kolbenstange 11 aufgeclipst. Bei dem Sperrring 22 handelt es sich um einen Spreizring. Der Sperrring oder Spreizring 22 ist teilweise in einer Ringnut 23 aufgenommen, die an der Kolbenstange 11 ausgebildet ist. Die Ringnut 23 dient dazu, den Sperrring 22 in axialer Richtung an der Kolbenstange 11 zu fixieren. Allerdings ist der Spreizring 22 nachgiebig und vorzugsweise geschlitzt ausgebildet, so dass er sich aufweiten und aus der Ringnut 23 lösen kann.

In dem in Figur 4 dargestellten Auslieferungszustand des Kolbens 9 liegt der Sperrring 22 an einem umlaufenden Kragen 24 an, der im Bereich des Durchgangslochs 10 radial innen von dem Zylindergehäuse 2 beziehungsweise der Führungshülse 5 absteht. Der an dem Kragen 24 anliegende Sperrring 22 verhindert in Figur 4, dass sich die Kolbenstange 11 zusammen mit dem Kolben 9 weiter aus dem Zylindergehäuse 2 heraus bewegen kann. Durch die Vorspannkraft der Kolbenrückstellfeder 15 (siehe Figur 6) wird der Sperrring 22 gegen den Kragen 24 der Führungshülse 5 gedrückt. Wenn die Kraft der Kolbenstange 11 auf den Sperrring 22 einen bestimmten Wert überschreitet, dann weitet sich der Sperrring oder Spreizring 22 auf und ermöglicht ein weiteres Ausfahren der Kolbenstange 11 mit dem Kolben 9. Dabei verschiebt sich der Spreizring 22 entlang einer konusartigen Erweiterung 25 und entlang einem kreiszylinderförmigen Abschnitt 26 bis er in eine Ringnut 27 einschnappt, die in Figur 5 dargestellt ist. Durch die Gestaltung der Spreizring- und Kolbenform lässt sich der Kraftverlauf einstellen. Anstatt eines geschlitzten Spreizrings kann auch ein geschlossener, nachgiebiger beziehungsweise elastischer Sperrring verwendet werden.

In Figur 5 befindet sich die Kolbenstange 11 in ihrer ausgefahrenen Stellung. Der Spreizring 22 ist teilweise in der Ringnut 27 angeordnet. In axialer Richtung ist der Sperrring 22 zwischen den Kragen 24 und einem Bund 28 angeordnet, der an dem dem Kolben 9 zugewandten Ende der Kolbenstange 11 ausgebildet ist.

In Figur 6 befindet sich die Kolbenstange 11 in ihrer eingefahrenen Stellung. Der Spreizring 22 ist immer noch in die Ringnut 27 eingeschnappt, so dass er im Betrieb des Kupplungsnehmerzylinders 1 keine weitere Wirkung entfaltet.

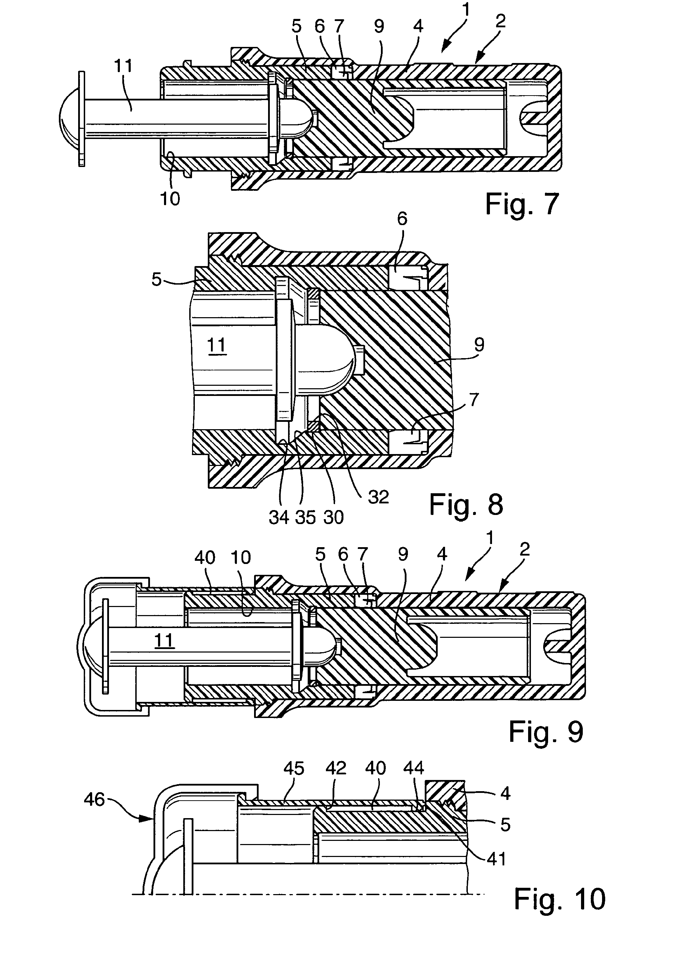

Bei dem in den Figuren 7 und 8 dargestellten Ausführungsbeispiel ist in der Führungshülse 5 radial innen eine Ringnut 30 ausgespart, die eine relativ geringe Nuttiefe aufweist. In die Ringnut 30 ist ein Sperrring 32 eingeclipst. Der Innendurchmesser des Sperrrings 32 ist kleiner als der Außendurchmesser des Kolbens 9. Dadurch wird sichergestellt, dass sich der Kolben 9 zusammen mit der Kolbenstange 11 nicht weiter aus dem Zylindergehäuse 2 heraus bewegen kann. Vorzugsweise ist zwischen dem Kolben 9 und dem geschlossenen Ende des Zylindergehäuses 2 eine (nicht dargestellte) Kolbenrückstellfeder eingespannt. Durch die Kolbenrückstellfeder wird der Kolben 9 in Anlage an dem Sperrring 32 gehalten. Bei dem Sperrring 32 handelt es sich um einen vorzugsweise geschlitzt ausgebildeten, nachgiebigen Spreizring.

Durch die Ringnut 30 wird der Kolben 9 in seiner in Figur 7 dargestellten Auslieferungsstellung gehalten. Wenn die Kraft des Kolbens 9 beziehungsweise der Kolbenstange 11 auf den Spreizring 32 einen bestimmten Wert überschreitet, dann verschiebt sich der Spreizring 32 in axialer Richtung zu dem Durchgangsloch 10 hin und entspannt sich in eine Ringnut 34, die in axialer Richtung benachbart zu der Ringnut 30 in der Führungshülse 5 ausgespart ist. Die Ringnut 34 weist eine deutlich größere Nuttiefe als die Ringnut 30 auf. Zwischen den beiden Ringnuten 30 und 34 ist eine konusartige Erweiterung 35 ausgebildet. Durch das Entspannen des Sperrrings 32 in die Ringnut 23 wird ein Ein- und Ausfahren des Kolbens ermöglicht, ohne dass die Kolbenbewegung durch den Spreizring 32 beeinträchtigt wird.

Bei dem in den Figuren 9 und 10 dargestellten Ausführungsbeispiel weist die Führungshülse 5 radial außen einen Führungsabschnitt 40 auf, der in axialer Richtung von zwei Anschlägen 41 und 42 begrenzt wird. Zwischen den Anschlägen 41 und 42 ist entlang dem Führungsabschnitt 40 ein umlaufender Kragen 44 hin und her bewegbar, der sich von einer Schutzhülse 45 radial nach innen erstreckt. Die Schutzhülse 45 ist Teil einer teleskopartigen Schutzeinrichtung 46, die den aus dem Zylindergehäuse 2 ausgefahrenen Teil der Kolbenstange 11 umgibt. In den Figuren 9 und 10 befindet sich der Kolben 9 in seiner Auslieferungsstellung. In diesem Zustand ist das Ende der Schutzhülse 45 mit dem Kragen 44 einstückig mit der Führungshülse 5 verbunden. Dadurch wird der Kolben 9 in seiner Auslieferungsstellung gehalten.

Wenn die Kraft der Kolbenstange 11 beziehungsweise des Kolbens 9 auf die Schutzhülse 45 einen bestimmten Wert überschreitet, dann bricht die Verbindungsstelle zwischen der Schutzhülse 45 und der Führungshülse 5 auf und ermöglicht fortan das vollständige Aus- und Einfahren der Kolbenstange 11 beziehungsweise des Kolbens 9. Durch die dargestellte Verschachtelung der Teleskopkomponenten der Schutzeinrichtung 46 wird verhindert, dass Schmutz in das Innere des Kupplungsnehmerzylinders 1 eindringt. Die Verbindung zwischen der Schutzhülse 45 und der Führungshülse 5 erstreckt sich im dargestellten Ausführungsbeispiel in axialer Richtung. Die feste Verbindung kann sich aber auch in radialer Richtung erstrecken.

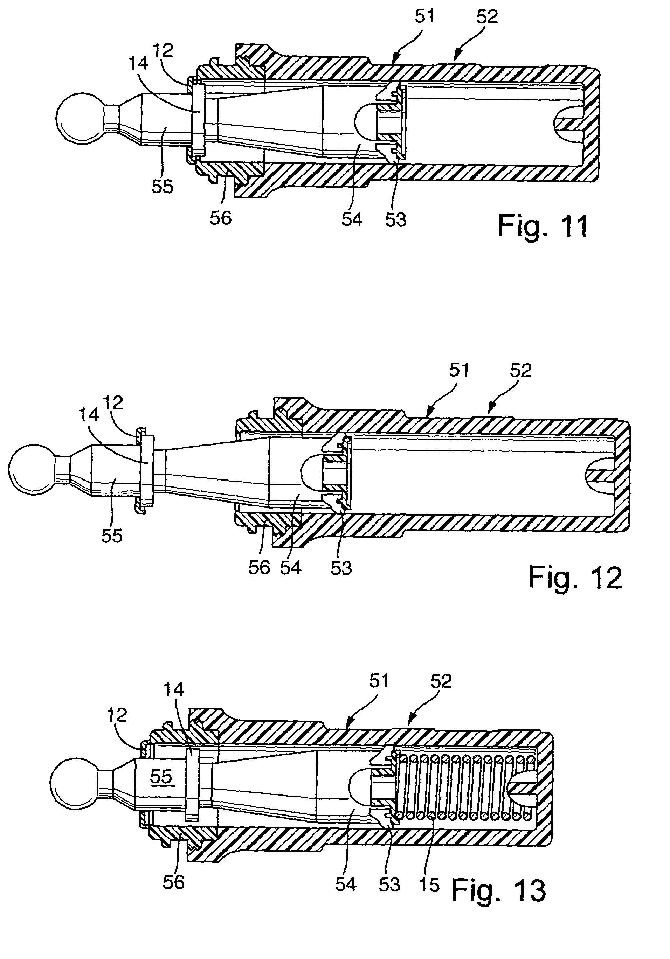

In den Figuren 11 bis 13 ist als Alternative zu den vorangegangenen Ausführungsbeispielen mit Kolben und Kolbenstange ein Ausführungsbeispiel mit einer in den Kolben integrierten Dichtung dargestellt. Diese Lösung ist auf alle vorangegangenen Ausführungsbeispiele übertragbar. Ein Kupplungsnehmerzylinder 51 umfasst ein Zylindergehäuse 52. An der Innenwandung des Zylindergehäuses 52 liegt eine Dichtlippe einer Ringdichtung 53 an, die in einer entsprechenden Nut eines Kolbens 54 aufgenommen ist. Der Kolben 54 ist einstückig mit einer Kolbenstange 55 verbunden. Ein Ende des Zylindergehäuses 52 ist geschlossen ausgebildet. An dem anderen Ende des Zylindergehäuses 52 ist eine Verschlusshülse 56 vorgesehen. Die Verschlusshülse 56 weist eine deutlich geringere axiale Ausdehnung als die Führungshülse 5 bei dem in den Figuren 1 bis 3 dargestellten Ausführungsbeispiel auf. Ansonsten entspricht das in den Figuren 11 bis 13 dargestellte Ausführungsbeispiel dem in den Figuren 1 bis 3 dargestellten Ausführungsbeispiel.

In Figur 11 befindet sich der Kolben 54 in seiner Auslieferungsstellung. Der an die Verschlusshülse 56 angespritzte Sperrring 12 hält den unter Vorspannung stehenden Kolben 54 in seiner Auslieferungsstellung.

In Figur 12 befindet sich die Kolbenstange 55 in ihrer vollständig ausgefahrenen Stellung. Der Sperrring 12 ist an der Sollbruchstelle von der Verschlusshülse 56 getrennt worden.

In Figur 13 befindet sich die Kolbenstange 55 in ihrer eingefahrenen Stellung. Die Kolbenstange 55 hat sich beim Einfahren entlang dem Sperrring 12 verschoben, der an der Verschlusshülse 56 anliegt.

### Bezugszeichenliste

- 1.: Kupplungsnehmerzylinder
- 2.: Zylindergehäuse
- 4.: Zylindergrundkörper
- 5.: Führungshülse
- 6.: Ringdichtung
- 7.: umlaufende Dichtlippe
- 9.: Kolben
- 10.: Durchgangsloch
- 11.: Kolbenstange
- 12.: Sperrring
- 14.: Bund
- 15.: Kolbenrückstellfeder
- 22.: Sperrring
- 23.: Ringnut
- 24.: Kragen
- 25.: konusartige Erweiterung
- 26.: kreiszylinderförmiger Abschnitt
- 27.: Ringnut
- 28.: Bund
- 30.: Ringnut
- 32.: Sperrring
- 34.: Ringnut
- 35.: konusartige Erweiterung
- 40.: Führungsabschnitt
- 41.: Anschlag
- 42.: Anschlag
- 44.: Kragen
- 45.: Schutzhülse
- 46.: Schutzeinrichtung
- 51.: Kupplungsnehmerzylinder
- 52.: Zylindergehäuse
- 53.: Ringdichtung
- 54.: Kolben
- 55.: Kolbenstange
- 56.: Verschlusshülse

## Patentansprüche

1. Geber- oder Nehmerzylinder für hydraulische Brems- oder Kupplungsanlagen, zum Beispiel in Kraftfahrzeugen, mit einem Zylindergehäuse (2;52), in dem ein Kolben (9;54) hin und her bewegbar aufgenommen ist, der eine Kolbenstange (11;55) aufweist, die sich durch ein Durchgangsloch (10) aus dem Zylindergehäuse (2) nach außen erstreckt, **dadurch gekennzeichnet, dass** an dem Zylindergehäuse (2;52) eine Sperreinrichtung angebracht ist, durch die der Kolben (9;54) solange in einer Auslieferungsstellung gehalten wird, bis mindestens eine Sollbruchstelle bricht, die an einer Verbindungsstelle zwischen dem Zylindergehäuse (2;52) und der Sperreinrichtung vorgesehen ist.

2. Geber- oder Nehmerzylinder nach Anspruch 1, **dadurch gekennzeichnet, dass** die Sperreinrichtung einen Sperrring (12) umfasst, der im Bereich des Durchgangslochs (10) einstückig mit dem Zylindergehäuse (2;52) verbunden ist.

3. Geber- oder Nehmerzylinder nach Anspruch 2, **dadurch gekennzeichnet, dass** zwischen dem Sperrring (12) und dem Zylindergehäuse (2;52) eine in Umfangsrichtung verlaufende Sollbruchlinie ausgebildet ist.

4. Geber- oder Nehmerzylinder nach Anspruch 2 oder 3, **dadurch gekennzeichnet, dass** an dem Kolben (9) oder an der Kolbenstange (11) ein Bund (14) ausgebildet ist, der in der Auslieferungsstellung des Kolbens (9) an dem Sperrring (12) anliegt.

5. Geber- oder Nehmerzylinder nach einem der Ansprüche 2 bis 4, **dadurch gekennzeichnet, dass** der Außendurchmesser des Sperrrings (12) größer als der Innendurchmesser des Durchgangslochs (10) in dem Zylindergehäuse (2;52) ist.

6. Geber- oder Nehmerzylinder für hydraulische Brems- oder Kupplungsanlagen, zum Beispiel in Kraftfahrzeugen, mit einem Zylindergehäuse (2), in dem ein Kolben (9) hin und her bewegbar aufgenommen ist, der eine Kolbenstange (11) aufweist, die sich durch ein Durchgangsloch (10) aus dem Zylindergehäuse (2) nach außen erstreckt, **dadurch gekennzeichnet, dass** ein Sperrring (22) kraftschlüssig und/oder formschlüssig so mit dem Kolben (9) oder der Kolbenstange (11) verbunden ist, dass der Kolben (9) und die Kolbenstange (11) in Längsrichtung relativ zu dem Sperrring (22) bewegbar sind, sobald eine auf den Kolben (9) oder die Kolbenstange (11) wirkende Kraft einen vorgegebenen Wert überschreitet.

7. Geber- oder Nehmerzylinder nach Anspruch 6, **dadurch gekennzeichnet, dass** an dem Zylindergehäuse (2) im Bereich des Durchgangslochs (10) ein sich radial nach innen erstreckender Kragen (24) angebracht ist, an dem der Sperrring (22) in einer Auslieferungsstellung des Kolbens (9) anliegt.

8. Geber- oder Nehmerzylinder nach Anspruch 6 oder 7, **dadurch gekennzeichnet, dass** die Kolbenstange (11) oder der Kolben (9) eine umlaufende Ringnut (23) aufweist, in die der Sperrring (22) in der Auslieferungsstellung des Kolbens (9) eingreift.

9. Geber- oder Nehmerzylinder nach Anspruch 8, **dadurch gekennzeichnet, dass** die Kolbenstange (11) oder der Kolben (9) eine weitere umlaufende Ringnut (27) aufweist, in die der Sperrring (22) in der vollständig ausgefahrenen Stellung der Kolbenstange (12) eingreift.

10. Geber- oder Nehmerzylinder für hydraulische Brems- oder Kupplungsanlagen, zum Beispiel in Kraftfahrzeugen, mit einem Zylindergehäuse (2), in dem ein Kolben (9) hin und her bewegbar aufgenommen ist, der eine Kolbenstange (11) aufweist, die sich durch ein Durchgangsloch (10) aus dem Zylindergehäuse (2) nach außen erstreckt, **dadurch gekennzeichnet, dass** ein Sperrring (32) kraftschlüssig und/oder formschlüssig so mit dem Zylindergehäuse (2) verbunden ist, dass der Kolben (9) in Längsrichtung relativ zu dem Sperrring (32) bewegbar ist, sobald eine auf den Kolben (9) oder die Kolbenstange (11) wirkende Kraft einen vorgegebenen Wert überschreitet.

11. Geber- oder Nehmerzylinder nach Anspruch 10, **dadurch gekennzeichnet, dass** das Zylindergehäuse (2) eine umlaufende Ringnut (30) aufweist, in die der Sperrring (32) in der Auslieferungsstellung des Kolbens (9) eingreift.

12. Geber- oder Nehmerzylinder nach Anspruch 11, **dadurch gekennzeichnet, dass** das Zylindergehäuse (2) eine weitere umlaufende Ringnut (34) aufweist, die zur Aufnahme des Sperrrings (32) dient, sobald der Kolben (9) aus seiner Auslieferungsstellung bewegt wird.

13. Geber- oder Nehmerzylinder für hydraulische Brems- oder Kupplungsanlagen, zum Beispiel in Kraftfahrzeugen, mit einem Zylindergehäuse (2), in dem ein Kolben (9) hin und her bewegbar aufgenommen ist, der eine Kolbenstange (11) aufweist, die sich durch ein Durchgangsloch (10) aus dem Zylindergehäuse (2) nach außen erstreckt und zumindest teilweise von einer Schutzeinrichtung (46) mit mindestens einer Schutzhülse (45) umgeben ist, die teleskopartig zwischen einer eingefahrenen und einer ausgefahrenen Stellung bewegbar ist, **dadurch gekennzeichnet, dass** die Schutzhülse (45) in ihrer eingefahrenen Stellung einstückig so mit dem Zylindergehäuse (2) verbunden ist, dass der Kolben (9) solange in einer Auslieferungsstellung gehalten wird, bis mindestens eine Sollbruchstelle bricht, die an der Verbindungsstelle zwischen dem Zylindergehäuse (2) und der Schutzhülse (45) vorgesehen ist.
